# EUROPEAN PATENT APPLICATION

(11) **EP 4 424 798 A1**
(43) Date of publication of application: **04.09.2024**
(21) Application number: 23159298.1
(22) Date of filing: 01.03.2023
(51) Int. Cl.: C10G 1/10, C10G 1/00, C10G 45/00

(54) **PROCESS FOR PRODUCING HYDROCARBON PRODUCTS FROM PLASTIC MATERIAL CONTAINING A TRIARYLPHOSPHITE COMPOUND**

(71) Applicant: OMV Downstream GmbH, 1020 Wien (AT)
(72) Inventor: LECHLEITNER, Andreas, 1020 Wien (AT); MASTALIR, Matthias, 1020 Wien (AT)
(74) Representative: SONN Patentanwälte GmbH & Co KG

(57) **Abstract**

The invention relates to a process for producing hydrocarbon products from plastics material, the process comprising the following steps:
(A) Providing the plastics material, wherein the plastics materials comprises a triarylphosphite compound;
(B) Depolymerizing the plastics material at a temperature of at least 360 °C to generate a hydrocarbon stream (27); and
(C) Separating the hydrocarbon stream (27) into a heavy product (28) and a light product (30),
wherein the light product (30) has a boiling range with a final boiling point below 480 °C.

## Description

The present invention relates to a process for producing hydrocarbon products from plastics material.

Hydrocarbon cracking processes generally involve breaking down longer-chain hydrocarbons into shorter-chain hydrocarbons, usually under moderate or high temperatures, e.g. between 400 and 600 °C, (thermal cracking) and/or in the presence of catalysts (catalytic cracking). A particularly interesting application of cracking processes is the depolymerization of plastics material, which is used in the recycling of plastic waste. Hydrocarbon products obtained from the depolymerization of plastics material may sometimes also be referred to as "pyrolysis oil", "synthetic crude" or "syncrude".

Processes for depolymerizing plastics material are of great interest as they can help reduce the amount of plastic waste in the environment. Pyrolysis oils obtained through such processes have a wide range of potential uses. For instance, they may be used as a source of fuel or as feedstock for the production of other chemicals and materials. To make pyrolysis oils suitable for such processes, the hydrocarbon products obtained from the depolymerization of plastics material are usually further processed in a variety of different refinery processes, e.g., by hydrotreating.

One of the challenges in the depolymerization of plastics material, in particular plastic waste, is the varying composition of the feedstock. Plastic waste can contain impurities, such as pigments, stabilizers, and additives, that can lead to downstream problems in refinery processes. For instance, such impurities can cause catalyst poisoning, which can result in decreased activity and selectivity of the catalysts, reduced lifetime of the equipment used, lower yields and lower quality products, as well as increased production costs due to the need for additional purification steps.

Thus, there remains a need for new and improved processes for depolymerizing plastics material, in particular processes that lead to higher quality and/or higher purity hydrocarbon products, especially hydrocarbon products that may be processed more flexibly in different types of refinery processes while causing less harm to refinery equipment.

It is an object of the present invention to provide such processes.

Therefore, the present invention provides a process for producing hydrocarbon products from plastics material, the process comprising the following steps:
(A) Providing the plastics material, wherein the plastics materials comprises a triarylphosphite compound;
(B) Depolymerizing the plastics material at a temperature of at least 360 °C to generate a hydrocarbon stream; and
(C) Separating the hydrocarbon stream into a heavy product and a light product,
wherein the light product has a boiling range with a final boiling point below 480 °C.

In the course of the present invention it was found that pyrolysis oils obtained from plastics material comprising triarylphosphite compounds, in particular the compound Tris(2,4-di-tert-butylphenyl)phosphite, can cause problems in downstream refinery processes, e.g. in hydrotreating. For instance, such pyrolysis oils may significantly reduce the lifetime of catalysts and/or other refinery equipment.

Surprisingly, it was found that these problems can be largely mitigated by removing certain higher boiling fractions from the depolymerized plastics material. Specifically, when a light product having a final boiling point between 380 and 480 °C was separated from the hydrocarbon stream obtained from the depolymerization, it was found that said light product could directly be used in downstream processes such as hydrotreating without causing significant harm to the catalysts and/or other equipment used.

The present inventors made the observation that when the plastics material contains triarylphosphite compounds, said compounds may at least partially be oxidized to surprisingly stable triarylphosphate compounds during depolymerization. Surprisingly, said triarylphosphate compounds can withstand the high temperatures during depolymerization and remain at least partially intact during the process. The inventors further found that these oxidation products of triarylphosphite compounds can be responsible for problems during downstream processing, such as by causing catalyst poisoning.

Moreover, the present inventors found that while the above-mentioned triarylphosphate compounds are surprisingly resistant to high temperatures and difficult to degrade, they can be removed by separating certain higher boiling fractions from the pyrolysis product, i.e., that the triarylphosphate compounds primarily accumulate in such higher boiling fractions. Thus, when a light product having a boiling range with a final boiling point below 480 °C is obtained, said light product can be directly used in downstream refinery processes, thus mitigating the problems caused by triarylphosphite compounds.

Triarylphosphite compounds are used as additives in some types of plastics material, e.g. as flame retardants. In the context of the invention it is preferred if the triarylphosphite compound is Tris(2,4-di-tert-butylphenyl)phosphite, Tris-phenyl phosphite and/or Tris-tolyl phosphite. It is particularly preferred if the triarylphosphite compound is tris(2,4-di-tert-butylphenyl)phosphite (CAS Registry Number 31570-04-4). Depending on the source, waste plastics material can contain significant amounts of these compounds. The present invention allows to directly process such plastics material.

The light product has a boiling range with a final boiling point below 480 °C, preferably below 470 °C, more preferred below 460 °C, more preferred below 450 °C, more preferred below 440 °C, more preferred below 430 °C, more preferred below 425 °C, more preferred below 420 °C, more preferred below 415 °C. In the course of the present invention, it turned out that the amount of triarylphosphate compounds in the light product can already be significantly reduced when the final boiling point is below 480 °C. By selecting an even lower final boiling point, the amount can be even further reduced. Thus, providing the light product with a lower final boiling point has the advantage that the amount of harmful triarylphosphate compounds is lower.

On the other hand, it is also advantageous if the final boiling point is not too low, since for many applications it is advantageous if the hydrocarbon product also contains heavier hydrocarbons. Thus, it is also preferred if the light product has a boiling range with a final boiling point above 300 °C, more preferred above 340 °C, more preferred above 350 °C, more preferred above 360 °C, more preferred above 370 °C, more preferred above 380 °C, more preferred above 390 °C, more preferred above 395 °C, more preferred above 400 °C, more preferred above 405 °C.

It is particularly preferred, if the light product has a boiling range with a final boiling point between 340 and 480 °C, more preferred between 350 and 470 °C, more preferred between 360 and 460 °C, more preferred between 370 and 450 °C, more preferred between 380 and 440 °C, more preferred between 390 and 430 °C, more preferred between 395 and 425 °C, more preferred between 400 and 420 °C, more preferred between 405 and 415 °C. Such a narrow range has been found to be highly advantageous by striking a balance between providing a light product containing relatively heavy hydrocarbons but at the same time containing a low amount of triarylphosphate compounds.

The skilled person is familiar with methods to determine the boiling range of hydrocarbon products. Any suitable method may be used in the context of the invention. Preferably, the boiling range is determined following the standard ISO 3924:2019, in particular, Procedure A or Procedure B as defined in said standard.

In a preferred embodiment of the inventive process, the plastics material comprises triarylphosphite compounds, in particular Tris(2,4-di-tert-butylphenyl)phosphite, in a concentration of at least 0.001 wt%, preferably at least 0.005 wt%, more preferred at least 0.01 wt%, more preferred at least 0.02 wt%, more preferred at least 0.05 wt%, more preferred at least 0.1 wt%, more preferred at least 0.2 wt%, more preferred at least 0.5 wt%, more preferred at least 1 wt%. While the inventive process can also be used with lower concentrations of the compound, such high concentrations are preferred because the advantageous effects of the invention are even more pronounced at such higher concentration, since in this case a higher amount of triarylphosphate concentrations is created during the depolymerization process. It is preferred if the plastics material comprises between 0.001 wt% and 15 wt%, preferably between 0.005 wt% and 10 wt%, more preferred between 0.01 wt% and 8 wt%, more preferred between 0.02 wt% and 6 wt%, more preferred between 0.05 wt% and 4 wt%, more preferred between 0.1 wt% and 3 wt%, more preferred between 0.2 wt% and 2.5 wt%, more preferred between 0.5 wt% and 2 wt%, more preferred between 1 wt% and 1.5 wt%.

The plastics material used in the inventive process may further comprises polyethylene (PE), polypropylene (PP), polystyrene (PS), polyvinyl chloride (PVC), polyethylene terephthalate (PET), polyamide (PA), styrene acrylonitrile (SAN) and/or acrylonitrile butadiene styrene (ABS). Preferably, the plastics material may be plastic waste, especially pre-consumer, post-consumer and/or post-industrial plastics. Preferably, the plastics material comprises polyolefins, preferably selected from polyethylene and polypropylene, and/or polystyrene. Plastic depolymerization may preferably be by pyrolysis, especially by noncatalytic thermal cracking or by catalytic cracking.

The plastics material is depolymerized at a temperature of at least 360 °C. At such temperatures the triarylphosphite compound is at least partially transformed into triarylphosphate compounds, as described above. However, even higher temperatures may be preferred to allow for more efficient and/or faster depolymerization. Thus, it is preferred if the plastics material is depolymerized at a temperature of at least 370 °C, more preferred at least 380 °C, more preferred at least 390 °C, more preferred at least 400 °C, more preferred at least 410 °C, more preferred at least 420 °C. Preferably the plastics material is depolymerized at a temperature between 360 °C and 490 °C, more preferred between 370 °C and 480 °C, more preferred between 380 °C and 470 °C, more preferred between 390 °C and 460 °C, more preferred between 400 °C and 450 °C.

In step (C) of the inventive process, the hydrocarbon stream may be separated into the heavy product and the light product using any suitable method known to the skilled person. For instance, it may be separated in a separation vessel, preferably wherein the separation vessel is a liquid-gas separation vessel, especially a cyclone.

In a preferred embodiment, the separation vessel comprises at least a top outlet and a bottom outlet, wherein step (C) of the inventive process comprises: (C.1) introducing the hydrocarbon stream into the separation vessel, whereby the light product is separated from the hydrocarbon stream and conveyed to the top outlet; (C.2) recovering the light product from the top outlet; (C.3) recovering the heavy product from the bottom outlet.

Moreover, step (c) of the process may further comprise (C.4) condensing a part of the light product exiting the separation vessel via the top outlet and conveying the condensed part of the light product back into the separation vessel. By condensing a part of the gaseous light product exiting via the top outlet, the sharpness of the separation can be improved. In particular, this condensation allows to preferentially condense impurities having a higher boiling point than the desired components of the light product, especially the higher boiling triarylphosphate compounds. In this way, these undesired compounds can be removed even more thoroughly.

In a preferred embodiment, said condensing is achieved by spraying a fluid onto the light product, wherein the temperature of said fluid is lower than the temperature of the light product, preferably wherein the temperature of the fluid is between 120 °C and 400 °C, preferably between 150 °C and 380 °C, especially between 200 °C and 350 °C.

In the context of the invention, it has turned out to be particularly advantageous if said fluid is obtained by recycling a part of the light product or a part of the heavy product. On the one hand, this improves the efficiency of the process. On the other hand, by providing a recycled stream, an even better sharpness of separation can be achieved.

Thus, in a preferred embodiment, said fluid is obtained by separating the heavy product into a heavy product heavy fraction and a heavy product light fraction and recycling at least a part of the heavy product light fraction. The separating may, e.g., be achieved using a solid-liquid separator, e.g. a cyclone. Alternatively, in a further preferred embodiment, said fluid is obtained by separating the light product into a light product heavy fraction and a light product light fraction and recycling at least a part of the light product heavy fraction.

The separation vessel is preferably operated at a temperature of 330 to 420 °C, preferably 350 to 400 °C. It is further preferred if the separation vessel is operated at a pressure between 1 and 12 bar, preferably 2 and 10 bar. Using such temperatures and pressures has turned out to be particularly suitable for obtaining a light product with the desired boiling range.

In a preferred embodiment, the inventive process further comprises the step (D) Hydrotreating at least a part of the light product. By ensuring a low amount of triarylphosphate compounds in the light product, the inventive process advantageously allows employing a hydrotreating step without extensive catalyst poisoning and/or other damage to refinery equipment.

A particularly preferred embodiment of a separation vessel that may be used for the inventive process is described in more detail below. In this embodiment, the separation vessel is an apparatus that allows at least a partial separation of vaporous, liquid and solid components of a hydrocarbon stream generated in step (B) of the inventive process in a single piece of equipment. However, the disclosed apparatus may also be used independently from the inventive process, i.e., also for separating components of other multiphase hydrocarbon streams.

Therefore, disclosed is an apparatus for separating components of a multiphase hydrocarbon stream, the apparatus comprising:
- an outer vessel having a top end comprising a top outlet, a bottom end comprising a bottom outlet, with a longitudinal axis extending between the top end and the bottom end, and an outer vessel body disposed between the top end and the bottom end and having an outer vessel internal volume in fluid communication with the top outlet and the bottom outlet;
   wherein the outer vessel body comprises:
   - a first section comprising a tangential inlet arranged to introduce the multiphase hydrocarbon stream tangentially into the outer vessel internal volume to create a vortex flow, and
   - a second section arranged closer to the bottom end than the first section, wherein the outer vessel internal volume has a smaller cross-sectional circumference in the second section than in the first section;
   - an inner vessel disposed within the outer vessel body, said inner vessel comprising:
   - an inner vessel body having an inner vessel internal volume, and
   - an inner bottom inlet oriented toward the bottom end of the outer vessel and in fluid communication with the inner vessel internal volume and with the outer vessel internal volume; and
   - a traversing conduit in fluid communication with the inner vessel internal volume and traversing the outer vessel body.

The described apparatus may be used in a process for separating components of a multiphase hydrocarbon stream, preferably wherein the multiphase hydrocarbon stream is the hydrocarbon stream generated in step (B) of the inventive process, comprising the steps of:
- introducing the multiphase hydrocarbon stream via the tangential inlet into the outer vessel internal volume to create a vortex flow, whereby a vapor product is separated from the hydrocarbon stream and conveyed to the top outlet;
- recovering said vapor product from the top outlet;
- conveying the hydrocarbon stream from the first section to the second section, thereby increasing the tangential velocity of the vortex flow, wherein the hydrocarbon stream is separated into a solid-enriched product stream and a solid-reduced product stream, wherein the solid-enriched product stream is conveyed to the bottom outlet;
- recovering the solid-enriched product stream from the bottom outlet;
- conveying the solid-reduced product stream to the inner vessel internal volume via the inner vessel bottom inlet; and
- recovering the solid-reduced product stream from the inner vessel internal volume via the traversing conduit.

When used in the context of the inventive process for producing hydrocarbon products from plastics material, the above-mentioned vapor product corresponds to the light product and the solid-enriched product stream corresponds to the heavy product mentioned in step (C) of the inventive process.

The described apparatus allows to at least partially separate vaporous, liquid and solid components of a multiphase hydrocarbon stream, especially the hydrocarbon stream generated in step (B) of the inventive process, in a single piece of equipment. In the context of the present invention, the term "multiphase" refers to the presence of more than one phase of matter. Preferably the multiphase hydrocarbon stream comprises at least three phases, in particular it comprises vaporous, liquid and solid components. The first section of the described apparatus advantageously allows to separate vapor from liquids and solids; the second section advantageously allows to further separate the liquid/solid mixture into a solid-enriched product stream and a solid-reduced product stream. Carrying out these two separation processes in a single piece of equipment decreases costs and complexity, while at the same time increasing efficiency. In addition, piping and control valves that may otherwise be needed to connect separate separation apparatuses can be avoided, leading to increased robustness and lower failure rates, e.g. due to clogging.

In the described apparatus, the outer vessel internal volume has a smaller cross-sectional circumference in the second section than in the first section of the outer vessel body. Unless specified otherwise, the term "cross-section" as used herein refers to an intersection with a plane that is substantially perpendicular to the longitudinal axis. Thus, the cross-sectional circumference of the outer vessel internal volume refers to the circumference of the area of the outer vessel internal volume in a cross-sectional plane that is substantially perpendicular to the longitudinal axis of the outer vessel. The first section of the outer vessel body allows to separate vapors from liquids and solids following the principle of cyclonic separation. Solid and liquid components are pushed radially outward toward the inner surface of the outer vessel body by centrifugal force and continue to move in an axial direction toward the second section, whereas vaporous components are pushed radially inward and move axially upward toward the top outlet. Providing a larger cross-sectional circumference in the first section reduces the axial velocity of the vapor product moving toward the top outlet, which advantageously reduces the dragging along of liquid droplets with the vapor and thus leads to an improved effectiveness of separation. At the same time, providing a smaller cross-sectional circumference in the second section allows for a higher tangential velocity of the vortex flow in the second section, which advantageously reduces the residence time and thereby reduces coking tendency. At the same time, the higher tangential velocity in the second section leads to a higher centrifugal force and thereby also improved separation efficiency in this section.

Preferably, the ratio of the cross-sectional circumference of the outer vessel internal volume in the second section to the cross-sectional circumference of the outer vessel internal volume in the first section is less than 0.95, preferably less than 0.9, more preferably less than 0.8, even more preferably less than 0.7, most preferably less than 0.6. It is especially preferred if said ratio is between 0.05 and 0.95, preferably between 0.1 and 0.9, more preferably between 0.25 and 0.8, even more preferably between 0.4 and 0.7, most preferably between 0.5 and 0.6.

Preferably the outer vessel internal volume in the first section has a ratio of its extension along the longitudinal axis to the diameter of its cross-sectional area between 0.2 and 5, preferably between 0.33 and 3, more preferably between 0.5 and 2, yet even more preferably between 0.75 and 1.8, most preferably between 1 and 1.4. In this context, it is especially preferred if the outer vessel internal volume in the first section is substantially cylindrical.

Preferably the outer vessel internal volume in the second section has a ratio of its extension along the longitudinal axis to the diameter of its cross-sectional area between 0.4 and 10, preferably between 0.66 and 6, more preferably between 1 and 4, yet even more preferably between 1.33 and 3, most preferably between 1.6 and 2.5. In this context, it is especially preferred if the outer vessel internal volume in the second section is substantially cylindrical.

In a preferred embodiment, the apparatus further comprises a third section connecting the first section and the second section. Preferably the outer vessel internal volume in said third section is substantially frustoconical.

In a preferred embodiment, the tangential velocity of the vortex flow in the first section is between 0.01 and 20 m/s, preferably between 0.05 and 10 m/s, more preferably between 0.1 and 5 m/s, most preferably between 0.2 and 2.5 m/s.

It is further preferred, if the tangential velocity of the vortex flow in the second section is between 0.05 and 10 m/s, preferably between 0.1 and 5 m/s, more preferably between 0.25 and 2.5 m/s, most preferably between 0.5 and 2 m/s.

In a preferred embodiment, the ratio of the tangential velocity of the vortex flow in the first section to the tangential velocity of the vortex flow in the second section is between 0.05 and 0.99, preferably between 0.1 and 0.95, more preferably between 0.2 and 0.9, even more preferably between 0.3 and 0.8, most preferably between 0.4 and 0.7.

In a further preferred embodiment, the average residence time of the vortex flow in the second section is between 0.1 and 30 minutes, preferably between 0.2 and 10 minutes, more preferably between 0.5 and 8 minutes, most preferably between 0.8 and 6 minutes. Preferably, the average residence time is determined by CFD simulation.

The tangential inlet comprised in the first section of the outer vessel body is arranged to enable the creation of a vortex flow inside the outer vessel internal volume when the multiphase hydrocarbon stream is introduced via said tangential inlet. The skilled person is familiar with such arrangements, as they are commonly used in cyclonic separators. Preferably, the tangential inlet is arranged tangentially to the cross-sectional area of the outer vessel internal volume in a plane that is substantially perpendicular to the longitudinal axis.

In a preferred embodiment, the apparatus further comprises a tangential conduit in fluid communication with the tangential inlet, preferably wherein the tangential conduit comprises a flash valve. Preferably, said tangential conduit is fluidly connected to a hydrocarbon cracking reactor. Providing a flash valve allows for a flash evaporation of the hydrocarbon stream, wherein the hydrocarbon stream undergoes a reduction in pressure and at least some of the components of the hydrocarbon stream go from a liquid phase into a vapor phase.

In the context of the apparatus, it is preferred if the ratio of cross-sectional circumference of the inner vessel internal volume to the cross-sectional circumference of the outer internal volume in the second section is at least 0.1, preferably at least 0.25, more preferably at least 0.4, even more preferably at least 0.5, yet even more preferably at least 0.6. It is especially preferred if said ratio is between 0.1 and 0.99, preferably between 0.25 and 0.95, more preferably between 0.4 and 0.9, even more preferably between 0.5 and 0.85, yet even more preferably between 0.6 and 0.8. A high ratio has the advantage that a larger proportion of the outer vessel internal volume is occupied by the inner vessel body, which leads to a higher tangential velocity of the vortex flow. This advantageously reduces residence time and therefore coking tendency and at the same time can lead to a higher centrifugal force and thus enhanced separation.

Preferably, the solid-enriched product stream has a higher solid content than the solid-reduced product stream, preferably by at least 5 %, more preferably by at least 10 %, even more preferably by at least 20 %, yet even more preferably by at least 50 %. Preferably, the solid content as used herein corresponds to the ash content. The ash content is preferably determined according to ISO 6245:2001.

In a preferred embodiment, the apparatus further comprises a cooling system fluidly connected to the top outlet, wherein the cooling system is adapted to condense a part of a vapor product exiting the outer vessel internal volume via the top outlet and convey the condensed part of the vapor product back into the outer vessel internal volume. Preferably, said cooling system comprises at least one spray nozzle. Similarly, in a preferred embodiment the process further comprises the step of condensing a part of the vapor product exiting the outer vessel internal volume via the top outlet and conveying the condensed part of the vapor product back into the outer vessel internal volume. Preferably said condensing is achieved by spraying a fluid onto the vapor product, wherein the temperature of said fluid is lower than the temperature of the vapor product. Preferably the temperature of said fluid is between 120°C and 350°C, preferably between 150°C and 300°C, especially between 180°C and 250°C. It is further preferred if said fluid is obtained by condensing and recycling a part of the recovered vapor product and/or a part of the solid-enriched product stream, as described above with reference to the light product and the heavy product.

The vapor product recovered from the process may be supplied to further downstream separation and/or washing steps. Preferably, it may be supplied a downstream separation column for separating the vapor product into different product streams by distillation.

In the context of the apparatus, it is preferred if the outer vessel internal volume in the first section has a substantially elliptical cross-section, preferably a substantially circular cross-section. It is especially preferred, if the outer vessel internal volume in the first section is substantially cylindrical or substantially frustoconical, preferably substantially cylindrical. In the same way, it is preferred if the outer vessel internal volume in the second section has a substantially elliptical cross-section, preferably a substantially circular cross-section. It is especially preferred, if the outer vessel internal volume in the second section is substantially cylindrical or substantially frustoconical, preferably substantially cylindrical. In connection with all embodiments, it is preferred that both the outer vessel internal volume in the first section and the outer vessel internal volume in the second section are substantially cylindrical or substantially frustoconical, especially substantially cylindrical.

In a preferred embodiment of the apparatus, the first section comprises a second tangential inlet arranged to introduce the multiphase hydrocarbon stream tangentially into the outer vessel internal volume to create a vortex flow. Providing a second tangential inlet allows to distribute the introduction of the hydrocarbon stream over two separate inlets. This allows to increase the total amount of material entering the outer vessel internal volume while keeping the flow velocity at the tangential inlet low enough to reduce erosion caused by solids contained in the multiphase hydrocarbon stream. In addition, the second tangential inlet may serve as a back-up in case the first tangential inlet becomes clogged.

In another preferred embodiment of the apparatus, the second section comprises a lower tangential inlet arranged to introduce a stream tangentially into the outer vessel internal volume. The lower tangential inlet may be used to further increase the tangential velocity of the vortex flow in the second section. This allows reducing the residence time and thereby the coking tendency, and at the same time can lead to a higher centrifugal force and thereby also improved separation in this section. In a preferred embodiment of the inventive process, at least a part of the recovered solid-enriched product stream is recycled and introduced via the lower tangential inlet into the second section of the outer vessel internal volume, preferably to further increase the tangential velocity of the vortex flow.

In a preferred embodiment, the inner vessel body is substantially cylindrical or substantially frustoconical, preferably substantially cylindrical. Preferably, the longitudinal axis of the inner vessel body is arranged substantially co-axially with the longitudinal axis of the outer vessel body. Preferably, at least a part of the inner vessel body is disposed within the second section of the outer vessel body.

Preferably the inner vessel internal volume has a ratio of its extension along the longitudinal axis to the diameter of its cross-sectional area between 0.5 and 10, more preferably between 1 and 6, yet even more preferably between 1.6 and 4, most preferably between 2.2 and 3.0. In this context, it is especially preferred if the inner vessel internal volume is substantially cylindrical.

In a preferred embodiment, the inner vessel comprises an inner top outlet oriented toward the top end of the outer vessel and in fluid communication with the outer vessel internal volume and the inner vessel internal volume. Such a top outlet allows vapor to exit from the inner vessel internal volume and be conveyed to the top outlet. Preferably, the traversing conduit traverses the outer vessel body at a position that is further down along the longitudinal axis than the inner top outlet of the inner vessel, such that liquid stream exits the inner vessel through the traversing conduit before the inner vessel overflows.

In this context it is preferred if the inner vessel comprises a barrier arranged between the inner top outlet and the top end of the outer vessel, wherein said barrier is arranged to at least partially block solids from entering the inner vessel internal volume via the inner top outlet but allow fluids, e.g. vapor, to exit the inner vessel internal volume via the inner top outlet. Preferably said barrier is conical and having an apex oriented towards the top end of the outer vessel.

In a preferred embodiment of the inventive process, the apparatus is operated at a temperature between 320°C and 450°C, preferably between 360°C and 400°C. Preferably, the temperature of the multiphase hydrocarbon stream at the tangential inlet is between 300°C and 480°C, preferably between 330°C and 450°C, more preferably between 350°C and 420°C, most preferably between 360°C and 400°C.

Preferably, the multiphase hydrocarbon stream is obtained from a hydrocarbon cracking reactor, which preferably is fluidly connected to the tangential inlet via a tangential conduit. In a preferred embodiment, the solid-reduced product stream recovered via the traversing conduit is recycled to said hydrocarbon cracking reactor.

The present invention is further illustrated by the following figures, without being limited thereto.
Figure 1 shows a process flow diagram of a first embodiment of the process for producing hydrocarbon products from plastics material.
Figures 2A and 2B show process flow diagrams of further embodiments of the process.
Figure 3 shows a longitudinal section of a preferred embodiment of a separation vessel that may be used in the context of the process.
Figure 4 shows a process flow diagram of a further embodiment of the process for producing hydrocarbon products from plastics material, using a separation vessel as shown in Figure 3.

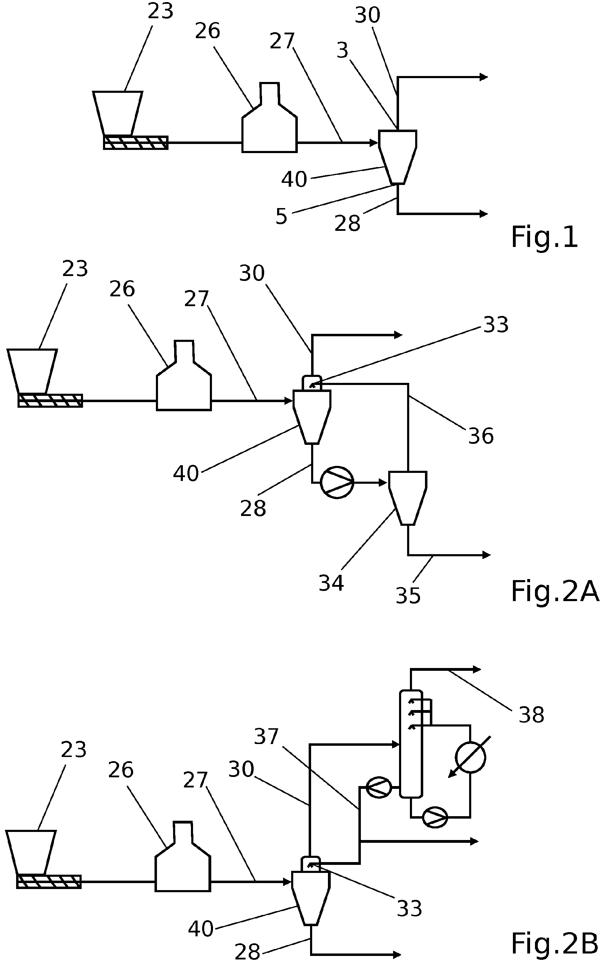

In the embodiment shown in Figure 1, plastics material comprising the triarylphosphite compound Tris(2,4-di-tert-butylphenyl)phosphite is supplied to an extruder 23, wherein the material is compacted, molten and/or degassed. The molten plastic material is then conveyed to a cracking reactor 26, wherein the plastics material is depolymerized, preferably at a temperature of at least 360°C. The high temperatures employed during this depolymerization cause the Tris(2,4-di-tert-butylphenyl)phosphite to be at least partially transformed into surprisingly stable triarylphosphate compounds, which can remain at least partially intact despite the high temperatures employed during depolymerization. From the cracking reactor 26, a hydrocarbon stream 27 is obtained, which is then introduced into a separation vessel 40. In the separation vessel 40, the hydrocarbon stream 27 is separated into a heavy product 28, which is obtained from a bottom outlet 5, and a light product 30, which is obtained from a top outlet 3. The separation is performed in such a way that the light product 30 has a boiling range with a final boiling point below 480 °C, whereas the heavy product 28 has a higher boiling range and therefore contains higher boiling components. The undesired triarylphosphate compounds are found primarily in the heavy product 28. Thus, a light product 30 is of particularly high quality and can advantageously be used in a variety of downstream applications and processes, e.g., hydrotreating.

In the embodiment shown in Figures 2A and 2B, a fluid is sprayed onto the light product 30 exiting the separation vessel 40 via the top outlet 3 in order to condense a part of said light product 30 and to convey it back into the separation vessel 40. The fluid has a lower temperature than the light product 30, preferably in the range of 120 °C to 400 °C. During this step, higher boiling components contained in the light product 30 are preferentially condensed, in particular undesired triarylphosphate compounds generated during depolymerization. At least a part of these undesired compounds is thus conveyed back into the separation vessel 40 to eventually end up in the heavy product 30.

The fluid used for condensing the part of the light product 30 may be introduced into the process from an external source. However, Figures 2A and 2B show preferred embodiments, wherein said fluid is obtained by recycling a part of the light product or a part of the heavy product. This is particularly advantageous as it improves the overall efficiency of the process and at the same time also improves the sharpness of separation. In the embodiment shown in Figure 2A, the heavy product 28 is separated into a heavy product heavy fraction 35 and a heavy product light fraction 36 in a solid liquid separator 34, which may be a cyclone. At least a part of the heavy product light fraction 36 is then recycled back and sprayed onto the light product 30 exiting the separation vessel 40 using one or more spray nozzles 33. Figure 2B shows an alternative embodiment, wherein the light product 30 is separated into a light product heavy fraction 37 and a light product light fraction 38 and wherein at least a part of the light product heavy fraction 37 is recycled back to be used as a fluid for spraying onto the light product 30.

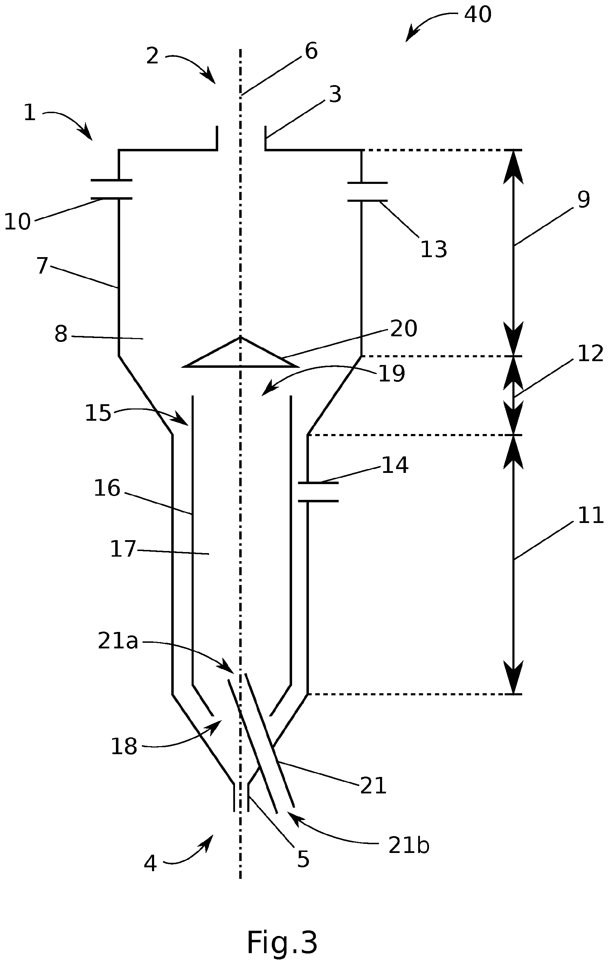

Figure 3 shows a longitudinal section of a preferred embodiment of the separation vessel that may be used in the context of the inventive process. The separation vessel (40) shown is an apparatus comprising an outer vessel 1 having a top end 2 comprising a top outlet 3, a bottom end 4 comprising a bottom outlet 5, with a longitudinal axis 6 extending between the top end 2 and the bottom end 4. The outer vessel 1 further comprises an outer vessel body 7 disposed between the top end 2 and the bottom end 4 and having an outer vessel internal volume 8 in fluid communication with the top outlet 3 and the bottom outlet 5. The outer vessel body 7 comprises a first section 9 comprising a tangential inlet 10, and a second section 11 arranged closer to the bottom end 4 than the first section 9. In the depicted embodiment, both the first section 9 and the second section 11 are substantially cylindrical. They are connected by a substantially frustoconical third section 12 of the outer vessel body 7. The tangential inlet 10 is arranged to introduce the multiphase hydrocarbon stream 27 tangentially into the outer vessel internal volume 8 to create a vortex flow. This can be achieved by injecting the stream tangentially onto the inner surface of the outer vessel body 7, in order to create a vortex flow on said inner surface, in a similar way as commonly done in cyclonic separators. In addition, in the depicted embodiment, the first section 9 comprises a second tangential inlet 13, which may be similar in nature to the tangential inlet 10. The outer vessel internal volume 8 has a smaller cross-sectional circumference in the second section 11 than in the first section 9, which during operation allows for a higher tangential velocity of the vortex flow in the second section 11 than in the first section 9. In the depicted embodiment, the second section 11 comprises a lower tangential inlet 14, which may be used to introduce a liquid stream to further increase the tangential velocity of the vortex flow in the second section 11.

The apparatus shown in Figure 3 further comprises an inner vessel 15 disposed within the outer vessel body 7. The inner vessel 15 comprises and inner vessel body 16 having an inner vessel internal volume 17 and an inner bottom inlet 18 oriented toward the bottom end 4 of the outer vessel 1 and fluidly connecting the inner vessel internal volume 17 with the outer vessel internal volume 8. In addition, in the depicted configuration, the inner vessel 15 comprises an inner top outlet 19 oriented toward the top end 2 of the outer vessel 1 and fluidly connecting the inner vessel internal volume 17 with the outer vessel internal volume 8. A barrier 20 is arranged between the inner top outlet 19 and the top end 2 to at least partially block solids from entering the inner vessel internal volume 17, while allowing fluids, such as vapors, to exit via the inner top outlet 19, for instance to be conveyed to the top outlet 3. The apparatus further comprises a traversing conduit 21 in fluid communication with the inner vessel internal volume 17, which traversing conduit 21 traverses the outer vessel body 7, so that a product stream can be conveyed from the inner vessel internal volume 17 outside of the outer vessel.

For using the apparatus depicted in Figure 3 as separation vessel 40 in the inventive process, a multiphase hydrocarbon stream 27 obtained from the depolymerization of plastic material is introduced into the outer vessel internal volume 8 via the tangential inlet 10 and/or the second tangential inlet 13 to create a vortex flow. As a result of centrifugal force, solids and liquids are pushed to the inner surface of the outer vessel body 7, whereas vaporous components are separated by moving radially inward and being conveyed to the top outlet 3. Preferably, the cross-sectional circumference in the first section 9 is low enough to ensure that the axial velocity of the light product 30 (also referred to herein as "vapor product") moving toward the top outlet 3 is low enough to reduce dragging along of liquid droplets. The light product 30 exiting the outer vessel internal volume 8 may be partially condensed in a cooling system, for instance by spraying a fluid onto the light product 30 using one or more spray nozzles 33. Said fluid may be obtained by condensing and recycling a part of the recovered light product 30 or heavy product 28 also referred to herein as "solid-enriched product stream"), as described above in relation to Figures 2A and 2B. The condensed part of the light product 30 is transferred back into the outer vessel internal volume 8 and may at least partially be removed through the solid-reduced product stream 25 and/or the heavy product 28. After separation of the light product 30, the remaining hydrocarbon stream is conveyed from the first section 9 via the third section 12 to the second section 11, whereby the tangential velocity of the vortex flow is increased due to the decreasing cross-sectional circumference. The higher tangential velocity leads to a shorter residence time, thereby reducing the coking tendency. At the same time, the higher tangential velocity leads to a higher centrifugal force and therefore to a more effective separation. Through this centrifugal force, the hydrocarbon stream is separated into a heavy product 28 (also referred to herein as "solid-enriched product stream") and a solid-reduced product stream 25. The heavy product 28 is conveyed to the bottom outlet. The solid-reduced product stream 25 generates liquid hold-up in the outer vessel internal volume 8 and thereby enters the inner vessel internal volume 17 via the inner bottom inlet 18, eventually reaching the traversing conduit 21, from which it can be recovered. Advantageously, the solid-reduced product stream enters the traversing conduit 21 at an inlet opening 21a and leaves the traversing conduit 21 at outlet opening 21b, whereas the outlet opening 21b is arranged outside the outer vessel body 7 and below the inlet opening 21a. Preferably, the traversing conduit 21 traverses the outer vessel body 7 at a position that is further down along the longitudinal axis 6 than the inner top outlet 19 of the inner vessel 15.

Advantageously, the recovered solid-reduced product stream 25 can be recycled back to the cracking reactor 26 for further cracking. The heavy product 28 is recovered from the bottom outlet and may be supplied to further downstream separation steps, e.g. to a coke catcher 29. A part of the heavy product 28 may also be recycled and introduced into the lower tangential inlet 14 in order to further increase the tangential velocity of the vortex flow in the second section 11. Alternatively, or in addition, a part of the heavy product 28 may be recycled as sprayed as a fluid onto the light product 30 using one or more spray nozzles 33, as described above.

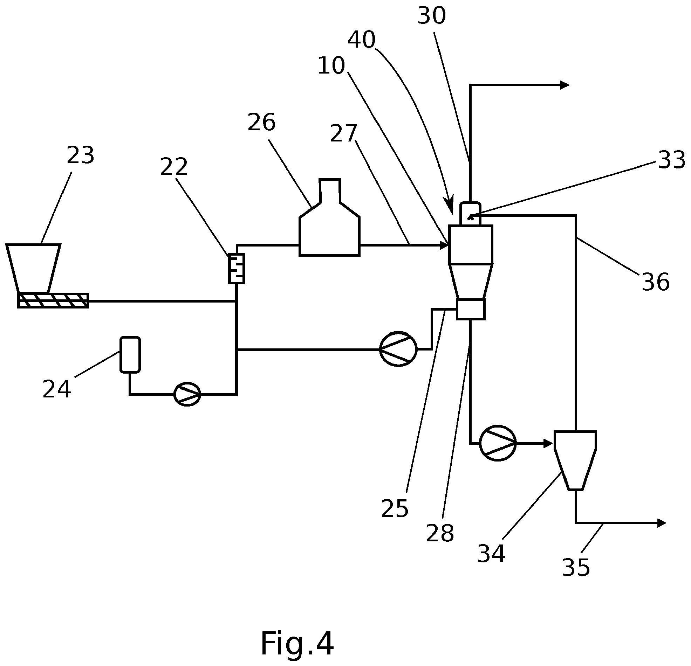

An embodiment of the inventive process, wherein the apparatus shown in Figure 3 is used as separation vessel 40, can be seen from Figure 4. Plastics material comprising Tris(2,4-di-tert-butylphenyl)phosphite is supplied to extruder 23, wherein it is compacted, molten and/or degassed. The molten plastic material, preferably at a temperature between 250°C and 280°C, is mixed in a static mixer 22 with an external solvent 24, preferably heavy oil, and/or at least a part of a recycled fraction of the depolymerized plastics material, in particular at least a part of the solid-reduced product stream 25 obtained from the separation vessel 40 in order to reduce the viscosity of the plastic melt. The resulting mixture is then conveyed to a cracking reactor 26, wherein the plastic is depolymerized as described above. From the cracking reactor 26, a multiphase hydrocarbon stream 27 is obtained, which is then introduced into the outer vessel 1 of the separation vessel 40 via the tangential inlet 10 as described herein above. At least a part of the solid-reduced product stream 25 obtained from the separation vessel 40 may be recycled and supplied to fresh plastic melt, preferably together with solvent 24. The heavy product 28 is conveyed to a solid liquid separator 34 in order to separate it into a heavy product heavy fraction 35 and a heavy product light fraction 36. At least a part of the heavy product light fraction 36 is recycled to one or more spray nozzles 33 arranged to cool and condense a part of the light product 30, as described above.

## Claims

1. A process for producing hydrocarbon products from plastics material, the process comprising the following steps:
(A) Providing the plastics material, wherein the plastics materials comprises a triarylphosphite compound;
(B) Depolymerizing the plastics material at a temperature of at least 360 °C to generate a hydrocarbon stream (27); and
(C) Separating the hydrocarbon stream (27) into a heavy product (28) and a light product (30),
wherein the light product (30) has a boiling range with a final boiling point below 480 °C.

2. The process according to claim 1, wherein the light product (30) has a boiling range with a final boiling point between 380 and 480 °C.

3. The process according to any one of the preceding claims, wherein the plastics material comprises triarylphosphite compounds in a concentration of at least 0.01 wt%.

4. The process according to any one of the preceding claims, wherein the plastics material further comprises polyethylene (PE), polypropylene (PP), polystyrene (PS), polyvinyl chloride (PVC), polyethylene terephthalate (PET), polyamide (PA), styrene acrylonitrile (SAN) and/or acrylonitrile butadiene styrene (ABS) .

5. The process according to any one of the preceding claims, wherein the plastics material is depolymerized at a temperature between 360 °C and 490 °C.

6. The process according to any one of the preceding claims, wherein in step (C) the hydrocarbon stream (27) is separated into the heavy product (28) and the light product (30) in a separation vessel (40), wherein the separation vessel (40) comprises at least a top outlet (3) and a bottom outlet (5) and wherein step (C) comprises:
(C.1) introducing the hydrocarbon stream (27) into the separation vessel (40), whereby the light product (30) is separated from the hydrocarbon stream and conveyed to the top outlet (3);
(C.2) recovering the light product (30) from the top outlet (3);
(C.3) recovering the heavy product (28) from the bottom outlet (5) .

7. The process according to the preceding claim, wherein step (C) further comprises
(C.4) condensing a part of the light product (30) exiting the separation vessel (40) via the top outlet (3) and conveying the condensed part of the light product (30) back into the separation vessel (40).

8. The process according to the preceding claim, wherein said condensing is achieved by spraying a fluid onto the light product (30), wherein the temperature of said fluid is lower than the temperature of the light product (30).

9. The process according to the preceding claim, wherein the temperature of the fluid is between 120°C and 400°C.

10. The process according to any one of the preceding claims, wherein said fluid is obtained by recycling a part of the light product (30) or a part of the heavy product (28).

11. The process according to any one of the preceding claims, wherein said fluid is obtained by separating the heavy product (28) into a heavy product heavy fraction (35) and a heavy product light fraction (36) and recycling at least a part of the heavy product light fraction (36).

12. The process according to any one of the preceding claims, wherein said fluid is obtained by separating the light product (30) into a light product heavy fraction (37) and a light product light fraction (38) and recycling at least a part of the light product heavy fraction (37).

13. The process according to any one of the preceding claims, wherein the separation vessel (40) is operated at a temperature of 330 to 420 °C.

14. The process according to any one of the preceding claims, wherein the separation vessel (40) is operated at a pressure between 1 and 12 bar.

15. The process according to any one of the preceding claims, further comprising the step
(D) Hydrotreating at least a part of the light product (30).
